# FASCICULE DE BREVET EUROPEEN

(11) **EP 2 360 997 B1**
(45) Date de publication et mention de la délivrance du brevet: **04.04.2012**
(21) Numéro de dépôt: 10192640.0
(22) Date de dépôt: 25.11.2010
(51) Int. Cl.: H05H 3/06

(54) **Procédé pour générer des neutrons**
Verfahren zur Neutronenerzeugung
Method for generating neutrons

(30) Priorité: 25.11.2009 FR 0958354
(43) Date de publication de la demande: 24.08.2011
(73) Titulaire: Mofakhami, Florence, 77760 Buthiers (FR); Mofakhami, Arash, 77760 Buthiers (FR); Nassar, Tarek, 02170 Espoo (FI); Ben Brahim, Driss, London W8 5PN (GB); Levet, Eric, 77920 Samois sur Seine (FR)
(72) Inventeur: Mofakhami, Arash, 77760, BUTHIERS (FR); Nassar, Tarek, 02170, ESPOO (FI)
(74) Mandataire: Tanty, François

(56) Documents cités:
- WO-A1-03/019219
- WO-A2-90/13129
- US-A- 4 390 494
- "UNIT 1: PARTICLE PHYSICS - Interactions and Conservation", Parrs Wood SCIENCE - Key Stage 5 - Physics , 2008, pages 1-7, XP002592004, Extrait de l'Internet: URL:http://www.parrswood.net/faculties/sci ence/particlephysics_fundamental_forces_in teractions.html [extrait le 2010-07-14]
- F. KUNNE: "Physics with polarized proton and electron collisions at HERA", NUCLEAR PHYSICS A, vol. A622, no. 1-2, 25 août 1997 (1997-08-25), pages 110-123, XP002592005, Netherlands ISSN: 0375-9474
- MULDER F M ET AL.: "Observation of polarized neutron interference in spin space", EUROPHYSICS LETTERS, vol. 51, no. 1, 1 juin 2000 (2000-06-01), pages 13-19, XP2591788, France ISSN: 0295-5075
- Ptitsyn v et al.: "eRHIC - FUTURE MACHINE FOR EXPERIMENTS ON ELECTRON-ION. COLLISIONS", Proceedings of EPAC 2006, Edinburgh, Scotland , juillet 2006 (2006-07), pages 676-678, XP002592007, Extrait de l'Internet: URL:http://accelconf.web.cern.ch/AccelConf /e06/PAPERS/MOPLS058.pdf [extrait le 2010-07-14]

## Description

La présente invention concerne notamment les procédés et sources de génération de neutrons.

### Arrière-plan

La demande internationale WO 2009/052330 décrit un procédé de génération de neutrons comportant une étape de collision d'un faisceau d'ions et d'une cible. La cible comporte des atomes ayant le même état de spin que les ions.

La demande internationale WO 99/05683 décrit un procédé de capture électronique par les protons afin de former des neutrons.

Il est connu de générer des neutrons comme décrit dans EP0338619 ou dans la publication « Giant Dipole Résonance Neutron Yields Produced By Electrons As A Function Of Target Material And Thickness » de Mao et al., Stanford Linear Accelerator Center, Stanford University. Toutefois, de tels procédés peuvent présenter un coût énergétique de génération des neutrons relativement élevé.

Un premier objectif de la présente invention est de proposer de nouveaux procédés de génération de neutrons.

Un second objectif de la présente invention est de proposer de nouveaux collisionneurs pour générer des neutrons.

Un troisième objectif de la présente invention est de disposer de procédés et de dispositifs de génération de neutrons ayant un coût énergétique de génération de neutrons inférieur à ceux des procédés et dispositifs connus de l'état de la technique.

Selon un premier aspect, l'invention concerne un procédé pour générer des neutrons comportant au moins les étapes successives consistant à :
a) mettre dans un état de spin défini et/ou dans un état interférentiel au moins un faisceau d'électrons et au moins un faisceau de noyaux choisis parmi les protons, deuterons et tritons, les faisceaux de noyaux et d'électrons mis dans un état interférentiel comportant chacun au moins une zone d'interférences constructives et au moins une zone d'interférences destructives, et
b) faire entrer en collision lesdits au moins un faisceau de noyaux et au moins un faisceau d'électrons, lorsque les faisceaux de noyaux et d'électrons sont mis dans un état de spin défini lors de l'étape a), l'étape a) comporte une étape d'application d'au moins :
   - un premier champ magnétique, configuré pour mettre les spins des noyaux dans un état défini, ayant une composante statique d'intensité comprise entre 0,5 et 45 T et/ou un gradient non nul sur l'axe de la collision, et
   - un second champ magnétique, configuré pour mettre les spins des électrons dans un état défini, ayant une composante statique d'intensité comprise entre 0,1 et 20 T et/ou un gradient non nul sur l'axe de la collision.

Le procédé selon l'invention peut permettre la génération d'un faisceau de neutrons.

Au sens de l'invention, les "protons" sont synonymes de "noyaux d'hydrogène", les deutérons sont synonymes de "noyaux de deutérium" et les tritons sont synonymes de "noyaux de tritium".

Par « faisceau », il faut comprendre un ensemble de particules, animées d'une vitesse, produit par une source dans une ou plusieurs directions spatiales donnée(s).

Par « mettre un faisceau dans un état de spin défini », il faut comprendre que les moyens mis en oeuvre pour la mise dans un état de spin défini permettent à, par exemple, au moins 50%, par exemple au moins 75%, par exemple sensiblement la totalité des particules constituant ledit faisceau d'avoir un état de spin déterminé.

Les spins des électrons et des noyaux peuvent, lors de l'étape de collision, être alignés dans le même sens.

Les spins des électrons respectivement des noyaux et les vecteurs vitesses des électrons respectivement des noyaux peuvent être colinéaires lors de l'étape de collision.

Par « spin et vecteur vitesse colinéaires », il faut comprendre que le spin et le vecteur vitesse de ladite particule peuvent être de même sens ou de sens opposé.

En particulier, les spins des électrons respectivement des noyaux et les vecteurs vitesses des électrons respectivement des noyaux peuvent être colinéaires et avoir le même sens lors de l'étape de collision. Autrement dit, les spins de particules données forment avec les vecteurs vitesses de ces mêmes particules un angle orienté compris entre - 10 et 10°.

Les faisceaux de noyaux et d'électrons peuvent, lors de l'étape de collision, avoir un sens de déplacement sensiblement opposé. Autrement dit, les vecteurs vitesses des noyaux et des électrons, amenés à entrer en collision, peuvent former, lors de l'étape de collision, un angle orienté compris entre 170 et 190°.

En variante, les faisceaux de noyaux et d'électrons peuvent avoir, lors de l'étape de collision, un sens de déplacement sensiblement identique. Autrement dit, les vecteurs vitesses des noyaux et des électrons, amenés à entrer en collision, peuvent former, lors de l'étape de collision, un angle orienté compris entre -10 et 10°.

Le procédé selon l'invention peut avoir un rendement de génération de neutrons supérieur à 10 %, par exemple à 25 %.

Le « rendement de génération de neutrons » est défini comme : [nombre de neutrons générés par la collision des faisceaux de noyaux et d'électrons] / [0,5*(nombre de protons au sein du faisceau de noyaux + nombre d'électrons au sein du faisceau d'électrons) + (nombre de neutrons au sein du faisceau de noyaux)].

Selon un autre de ses aspects, l'invention concerne un collisionneur pour générer des neutrons, par exemple pour la mise en oeuvre d'un procédé tel que décrit ci-dessus, comportant :
- une enceinte,
- une source de noyaux configurée pour générer au moins un faisceau de noyaux choisis parmi les protons, deuterons et tritons,
- une source d'électrons configurée pour générer au moins un faisceau d'électrons, et
   - un moyen permettant de générer des champs magnétiques configurés pour mettre lesdits au moins un faisceau de noyaux et au moins un faisceau d'électrons dans un état de spin défini avant la collision, ledit moyen permettant la génération d'au moins :
      - un premier champ magnétique, configuré pour mettre les spins des noyaux dans un état défini, ayant une composante statique d'intensité comprise entre 0,5 et 45 T et/ou un gradient non nul sur l'axe de la collision, et
      - un second champ magnétique, configuré pour mettre les spins des électrons dans un état défini, ayant une composante statique d'intensité comprise entre 0,1 et 20 T et/ou un gradient non nul sur l'axe de la collision, et/ou
   - un moyen comportant, notamment un ou plusieurs dispositifs interférométriques, permettant d'obtenir des interférences de particules configuré pour mettre lesdits au moins un faisceau de noyaux et au moins un faisceau d'électrons dans un état interférentiel, notamment dans un état d'interférences spatiales, avant la collision, les faisceaux de noyaux et d'électrons mis dans un état interférentiel comportant chacun au moins une zone d'interférences constructives et au moins une zone d'interférences destructives.

Par « collisionneur », il faut comprendre un dispositif permettant l'obtention d'au moins une collision entre deux faisceaux de particules.

Selon encore un autre de ses aspects, l'invention concerne une installation médicale, par exemple pour la destruction des cellules cancéreuses humaines ou animales, comportant au moins :
- un moyen de positionnement d'un patient à traiter,
- un collisionneur, par exemple tel que défini plus haut, comportant au moins :
   - une enceinte,
   - une source de noyaux configurée pour générer au moins un faisceau de noyaux,
   - une source d'électrons configurée pour générer au moins un faisceau d'électrons, et
   - un moyen permettant de générer un ou plusieurs champ(s) magnétique(s) configuré(s) pour mettre les spins des noyaux et des électrons dans un état défini, et/ou
   - un moyen permettant d'obtenir des interférences de particules configuré pour mettre lesdits au moins un faisceau de noyaux et d'électrons dans un état interférentiel

Les neutrons générés selon l'invention peuvent ainsi par exemple être utilisés pour l'hadronthérapie.

Le moyen permettant de générer un ou plusieurs champ(s) magnétique(s) mis en oeuvre dans les collisionneurs selon l'invention peut être choisi parmi les bobines supraconductrices, les bobines résistives ou les bobines « hybrides » comportant une bobine résistive et une bobine supraconductrice. Il est aussi possible d'utiliser des circuits résonants, par exemple de type RLC, comportant au moins une bobine de résonance.

Le moyen permettant d'obtenir des interférences de particules mis en oeuvre dans les collisionneurs selon l'invention peut comporter des dispositifs interféromètriques, par exemple tels que détaillés par la suite, comportant, par exemple, un ou plusieurs réseaux de diffraction. Il est aussi par exemple possible d'utiliser un ou plusieurs champ(s) magnétique(s) afin d'obtenir des particules mises dans un état interférentiel.

Selon encore un autre de ses aspects, l'invention concerne l'utilisation des neutrons générés par les procédés et/ou les collisionneurs tels que décrits ci-dessus pour la fusion nucléaire ou plus généralement l'obtention de noyaux en Physique expérimentale, la production de radio-isotopes et la transmutation.

Les valeurs pour un paramètre, par exemple relatif aux faisceaux d'électrons et de noyaux, pourront être choisies en fonction des valeurs des autres paramètres.

### Faisceau de noyaux

### Nature des sources de noyaux

Le procédé de génération de neutrons selon l'invention peut comporter, avant l'étape a), une étape de génération du faisceau de noyaux.

Comme source de noyaux utilisable dans le cadre de la présente invention, on peut citer la source enseignée dans la publication « Ion Gun Injection In Support Of Fusion Ship II Research And Development » de MILEY *et al..*

Les sources de noyaux peuvent comporter en leur sein tout type d'accélérateurs de noyaux utilisables comme les accélérateurs rectilignes ou linéaires, les accélérateurs circulaires comme les cyclotrons ou synchrotrons.

### Caractéristiques du faisceau de noyaux

Le faisceau de noyaux, peut avoir, au moment de sa génération, un diamètre compris entre 10⁻⁸ et 10⁻¹ m, par exemple entre 10⁻⁶ et 10⁻¹ m, par exemple entre 5.10⁻⁴ et 5.10⁻³ m.

Par « diamètre d'un faisceau », il faut comprendre la plus grande dimension dudit faisceau en section transversale.

Le faisceau de noyaux peut avoir un flux de noyaux compris entre 10¹⁴ et 10²³ noyaux/s.

Au moins 50 %, par exemple au moins 75 %, par exemple sensiblement la totalité des noyaux constituant le faisceau de noyaux peuvent avoir une énergie comprise entre 1 et 10⁷ eV, par exemple entre 1 et 10⁶ eV, par exemple entre 1 et 10⁴ eV.

Le faisceau de noyaux peut être émis de manière continue.

En variante, le faisceau de noyaux peut être pulsé.

Par « faisceau pulsé », il faut comprendre que le faisceau est émis sous la forme d'impulsions de durée par exemple inférieure ou égale à 10⁻³s, par exemple à 1 µs, par exemple à 1 ns, par exemple inférieure ou égale à 10⁻¹¹ s.

Les impulsions peuvent par exemple avoir une durée comprise entre 10⁻¹² et 10⁻⁶ s.

Un faisceau pulsé peut notamment permettre de limiter les interactions perturbatrices entre les particules constituant les faisceaux et les particules générées lors de l'étape de collision.

Lorsque le faisceau de noyaux est pulsé, la durée séparant deux impulsions successives peut par exemple être inférieure ou égale à 1 ms, par exemple à 1 µs, par exemple inférieure ou égale à 1 ns.

Lorsque le faisceau de noyaux est pulsé, le nombre de noyaux émis par impulsion peut par exemple être compris entre 10¹² et 10¹⁷ noyaux/ impulsion.

### Faisceau d'électrons

### Nature des sources d'électrons

Le procédé de génération de neutrons selon l'invention peut comporter, avant l'étape a), une étape de génération du faisceau d'électrons par exemple à partir d'une source d'électrons thermoïonique ou à effet de champ.

### Source d'électrons thermoïonique

Le procédé de génération d'un faisceau d'électrons à partir d'une source thermoïonique comporte une étape de chauffage, par exemple par effet Joule, d'un matériau conducteur.

Cette étape de chauffage peut permettre d'arracher des électrons qui étaient initialement liés au matériau conducteur.

Les électrons arrachés sont ensuite accélérés sous un champ électrique afin de générer un faisceau d'électrons.

Le matériau conducteur peut par exemple être choisi parmi le tungstène ou l'hexaborure de lanthane (LaB₆).

### Source d'électrons à effet de champ

Le procédé de génération d'un faisceau d'électrons, à partir d'une source à effet de champ, peut comporter une étape d'application d'une différence de potentiel entre une cathode métallique, ayant par exemple une extrémité en forme de pointe, et une anode.

La forme de l'extrémité de la cathode métallique peut permettre l'obtention à son voisinage d'un champ électrique d'intensité supérieure à 10⁶ V/m, par exemple à 5.10⁶ V/m. De tels champs électriques peuvent permettre l'arrachage d'électrons du matériau formant la cathode.

Quelle que soit leur nature, les sources d'électrons peuvent comporter en leur sein tout type d'accélérateurs d'électrons utilisables comme les accélérateurs rectilignes ou linéaires, les accélérateurs circulaires comme par exemple les cyclotrons ou synchrotrons.

### Caractéristiques du faisceau d'électrons

Le diamètre du faisceau d'électrons, au moment de sa génération, peut être compris entre 10⁻⁸ et 10⁻¹ m, par exemple entre 10⁻⁶ et 10⁻¹ m, par exemple entre 5.10⁻⁴ et 5.10⁻³ m.

Le faisceau d'électrons peut par exemple avoir un flux d'électrons compris entre 10¹⁴ et 10²³ électrons/s.

Au moins 50%, par exemple au moins 75 %, par exemple sensiblement la totalité des électrons constituant le faisceau d'électrons peuvent avoir une énergie comprise entre 1 et 10⁷ eV, par exemple entre 1 et 10⁶ eV, par exemple entre 1 et 10⁴ eV.

Le faisceau d'électrons peut être émis de manière continue.

En variante, le faisceau d'électrons peut être pulsé.

Ainsi, le faisceau d'électrons peut être émis sous la forme d'impulsions de durée par exemple inférieure ou égale à 10⁻³s, par exemple à 1 µs, par exemple à 1 ns, par exemple inférieure ou égale à 10⁻¹¹ s.

Les impulsions peuvent par exemple avoir une durée par exemple comprise entre 10⁻¹² et 10⁻⁶ s.

Lorsque le faisceau d'électrons est pulsé, la durée séparant deux impulsions successives peut par exemple être inférieure ou égale à 1 ms, par exemple à 1 µs, par exemple inférieure ou égale à 1 ns.

Lorsque le faisceau d'électrons est pulsé, le nombre d'électrons émis par impulsion peut par exemple être compris entre 10¹² et 10¹⁷ électrons / impulsion.

Par ailleurs, le faisceau de neutrons généré par le procédé selon l'invention peut être émis de manière continue.

En variante, lorsque le faisceau de neutrons généré est émis sous la forme d'impulsions, le procédé selon l'invention peut comporter une étape de réglage de la durée d'impulsion dudit faisceau.

L'étape de réglage de la durée d'impulsion du faisceau de neutrons peut comporter une étape de réglage de la durée d'impulsion du faisceau d'électrons et/ou une étape de réglage de la durée d'impulsion du faisceau de noyaux.

Le faisceau de neutrons généré peut être émis sous la forme d'impulsions de durée par exemple inférieure ou égale à 10⁻³s, par exemple à 1 µs, par exemple à 1 ns, par exemple inférieure ou égale à 10⁻¹¹ s.

Le procédé selon l'invention peut comporter une étape de réglage du flux de neutrons générés.

L'étape de réglage du flux de neutrons générés peut comporter une étape de réglage du flux d'électrons du faisceau d'électrons et/ou une étape de réglage du flux de noyaux du faisceau de noyaux.

Le faisceau de neutrons généré peut avoir un flux de neutrons par exemple compris entre 10¹⁴ et 10²³ neutrons/s.

Il est donc possible, dans le cadre de la présente invention, de disposer de faisceaux de neutrons dont on peut faire varier le flux et/ou la durée des impulsions.

### Etats interférentiels

Le procédé de génération de neutrons selon l'invention peut comporter, avant l'étape de collision, une étape de mise dans un état interférentiel des faisceaux de noyaux et d'électrons.

Par « faisceau mis dans un état interférentiel », il faut comprendre que les particules, qui de par leur nature quantique sont associées à des ondes, constituant le faisceau interfèrent entre elles formant ainsi, au sein même du faisceau, au moins une zone d'interférences constructives et au moins une zone d'interférences destructives.

Les faisceaux de noyaux et d'électrons peuvent être mis dans un état d'interférences spatiales. Dans ce cas, les zones d'interférences constructives correspondent à des zones de forte probabilité de détection des particules et les zones d'interférences destructives correspondent à des zones de faible probabilité de détection des particules.

Un faisceau de particules mis dans un état d'interférences spatiales peut notamment être obtenu par traversée d'au moins un dispositif interférométrique.

Les faisceaux de noyaux et d'électrons peuvent notamment ne pas être dans un état d'interférences spinoriel. Les moyens pour mettre les faisceaux de noyaux et d'électrons dans un état interférentiel peuvent notamment être différents de l'action d'un champ électromagnétique.

Pour chacun des faisceaux de noyaux et d'électrons mis dans un état interférentiel, la largeur des zones d'interférences constructives et destructives peut être inférieure ou égale à 10⁻¹⁰ m, par exemple à 10⁻¹³ m, par exemple à 10⁻¹⁴ m, par exemple à 10⁻¹⁵ m.

Les zones d'interférences constructives des faisceaux de noyaux et d'électrons, mis dans un état interférentiel, peuvent se recouvrir au moins partiellement, par exemple sensiblement en totalité, lors de l'étape de collision.

Plus particulièrement, au moins 50 %, par exemple au moins 75 %, par exemple sensiblement la totalité des volumes des zones d'interférences constructives respectives des faisceaux de noyaux et d'électrons, mis dans un état interférentiel, peuvent se recouvrir lors de l'étape de collision.

La théorie relative à la dualité onde/corpuscule des particules mises en jeu prévoit que les particules constituant le faisceau mis dans un état d'interférences spatiales, peuvent avoir une probabilité de détection supérieure dans les zones d'interférences constructives que dans les zones d'interférences destructives.

Le recouvrement des zones d'interférences constructives respectives des faisceaux, mis chacun au préalable dans un état d'interférences spatiales, peut entraîner un recouvrement des zones de probabilité maximale de détection des particules et peut donc permettre d'augmenter les probabilités de collision des particules constituant les deux faisceaux.

### Procédé d'obtention de faisceaux mis dans un état interférentiel

L'étape de mise dans un état interférentiel, notamment dans un état d'interférences spatiales, des faisceaux de noyaux et d'électrons peut au moins comporter :
- une étape de traversée, par le faisceau de noyaux, d'un premier dispositif interférométrique apte à mettre ledit faisceau de noyaux dans un état interférentiel, et
- une étape de traversée, par le faisceau d'électrons, d'un second dispositif interférométrique apte à mettre ledit faisceau d'électrons dans un état interférentiel.

Les premier et second dispositifs interférométriques peuvent être identiques ou différents. Les premier et second dispositifs interférométriques peuvent permettre la mise dans un état d'interférences spatiales des faisceaux de noyaux et d'électrons.

Le faisceau de noyaux et/ou d'électrons peut subir, lors de l'étape de traversée de son dispositif interférométrique, au moins une, par exemple au moins deux, par exemple au moins trois diffractions successives.

Le(s) premier et/ou second dispositif(s) interferomètrique(s) peuvent comporter un ensemble d'au moins quatre, par exemple au moins cinq, par exemple au moins six réseaux de diffraction.

Les réseaux de diffraction peuvent être des réseaux en transmission.

Les réseaux de diffraction peuvent comporter des monocristaux de silicium.

Des dispositifs interferomètriques utilisables dans le cadre de la présente invention sont par exemple décrits dans « Neutron Interferometry », H. Rauch, ISBN : 78-3-540-70622-9.

L'étape de mise dans un état interférentiel des faisceaux de noyaux et d'électrons peut, en outre, comporter une étape de traversée d'au moins un monochromateur par l'un au moins desdits faisceaux.

L'étape de traversée dudit au moins un monochromateur peut avoir lieu avant l'étape de traversée du dispositif interferomètrique.

En variante, lors de l'étape de mise dans un état interférentiel des faisceaux de noyaux et d'électrons, chacun desdits faisceaux peut ne pas traverser de monochromateur. Ainsi, lors de l'étape de mise dans un état interférentiel des faisceaux de noyaux et d'électrons, il est possible que lesdits faisceaux soient polychromatiques.

L'étape de mise dans un état interférentiel des faisceaux de noyaux et d'électrons peut, en outre, comporter une étape de traversée d'au moins un collimateur par l'un au moins par exemple chacun desdits faisceaux.

Les collimateurs de noyaux utilisables dans le cadre de la présente invention peuvent par exemple comporter, par exemple consister en, du cuivre ou du graphite.

Un exemple de collimateur d'électrons convenant à l'invention est par exemple décrit dans US 3 942 019.

L'étape de traversée d'un collimateur peut avoir lieu après l'étape de traversée du dispositif interferomètrique et peut permettre d'obtenir un seul faisceau à partir d'une pluralité de faisceaux incidents.

En variante, lors de l'étape de mise dans un état interférentiel des faisceaux de noyaux et d'électrons, chacun desdits faisceaux peut ne pas traverser de collimateur. Il est, par exemple, possible d'utiliser des dispositifs interférométriques à symétrie sphérique où les faisceaux émergents peuvent converger vers un même point.

L'étape de mise dans un état interférentiel des faisceaux de noyaux et d'électrons peut comporter une étape de maintien des états interférentiels desdits faisceaux.

Cette étape de maintien des états interférentiels peut par exemple comporter une étape de confinement optique des faisceaux de noyaux et d'électrons, laquelle peut par exemple être réalisée en utilisant un ou plusieurs laser(s).

En outre, les faisceaux de neutrons peuvent subir une étape de traversée d'au moins un collimateur. Il est alors, par exemple, possible d'utiliser en tant que collimateurs des empilements de films de polyéthylène ou de films de Si monocristallin recouverts de¹⁰B ou de Gd.

### Champs magnétiques

### Champs magnétiques utilisés pour la mise dans un état de spin défini des faisceaux

L'étape de mise dans un état de spin défini des faisceaux de noyaux et d'électrons peut, comme mentionné plus haut, comporter au moins une étape d'application d'au moins :
- un premier champ magnétique, configuré pour mettre les spins des noyaux dans un état défini, ayant une composante statique dans le temps d'intensité comprise entre 0,5 et 45 T et/ou un gradient non nul sur l'axe de la collision, et
- un second champ magnétique, configuré pour mettre les spins des électrons dans un état défini, ayant une composante statique dans le temps d'intensité comprise entre 0,1 et 20 T et/ou un gradient non nul sur l'axe de la collision.

Les premier et second champs magnétiques peuvent être identiques ou distincts.

Les premier et second champs magnétiques peuvent être générés par la même source ou par des sources distinctes.

Au moins l'un, par exemple chacun, des premier et second champs magnétiques peuvent être statiques.

En variante, au moins l'un, par exemple chacun, des premier et second champs magnétiques peuvent comporter une composante statique et une composante variable non nulle.

Dans la suite, pour un champ magnétique donné *̅B̅*̅(x,y,z,t), on définit sa composante statique *̅B̅*̅ₛₜₐₜ (x,y,z) et sa composante variable *̅B̅*̅ (x,y,z,t) comme vérifiant : *̅B̅*̅(x,y,z,t) = *̅B̅*̅ₛₜₐₜ (x,y,z) + *̅B̅*̅ (x,y,z,t) où *̅B̅*̅ₛₜₐₜ (x,y,z) est une grandeur indépendante du temps et *̅B̅*̅ (x,y,z,t) est une grandeur ne comportant aucun terme invariant en fonction du temps. En d'autres termes, le spectre fréquentiel de *̅B̅*̅ (x,y,z,t) ne comporte pas de pic centré sur la fréquence nulle.

### Composantes statiques

Les caractéristiques relatives aux composantes statiques décrites ci-dessous sont aussi valables pour les champs magnétiques statiques ayant une composante variable nulle.

La composante statique du premier, respectivement second, champ magnétique peut permettre de mettre dans un état de spin défini le faisceau de noyaux, respectivement d'électrons.

La composante statique du premier champ magnétique peut par exemple avoir une intensité comprise entre 1 T et 20 T.

La composante statique du second champ magnétique peut par exemple avoir une intensité comprise entre 1 T et 20 T.

Des composantes statiques convenant à l'invention peuvent être générées par des bobines supraconductrices, des bobines résistives ou des bobines « hybrides » comportant une bobine résistive et une bobine supraconductrice.

Les premier et second champs magnétiques peuvent avoir des composantes variables différentes.

Les composantes variables des premier et/ou second champ(s) magnétique(s) peuvent par exemple être appliquées sous la forme d'au moins un faisceau de photons.

L'application d'une composante variable peut permettre, pour les particules mises en jeu, d'augmenter la proportion de spins orientés dans le sens de la composante statique afin d'augmenter la probabilité de génération de neutrons lors de la collision.

En effet, la théorie quantique prévoit que l'application d'au moins une composante variable ayant par exemple un spectre fréquentiel comportant au moins un pic centré sur une fréquence égale à la fréquence de résonance des spins peut par exemple permettre d'induire des transitions entre différents niveaux énergétiques. Cette fréquence de résonance correspond à la fréquence de précession des spins autour de la composante statique, dite précession de Larmor. Il devient alors possible pour des spins par exemple orientés, avant application de la composante variable, dans le sens inverse du sens d'application de la composante statique d'absorber au moins une partie de l'énergie de la composante variable appliquée et de transiter vers un état orienté où lesdits spins sont alignés dans le même sens que la composante statique.

On peut par exemple appliquer la composante variable en même temps que la composante statique.

La mesure de la quantité de neutrons produits, de protons déviés ou du potentiel électrique créé par les protons n'ayant pas subi de collision peut permettre à un opérateur de disposer d'indicateurs sur la nécessité d'appliquer la composante variable des premier et/ou second champ(s) magnétique(s).

Les lignes de champs de la composante variable peuvent être, au niveau des faisceaux de particules, non colinéaires aux lignes de champs de la composante statique. Elles peuvent, par exemple, former avec celles-ci un angle supérieur à 10°, par exemple supérieur à 45°. En particulier, les lignes de champ de la composante variable peuvent former un angle compris entre 85 et 95° avec les lignes de champ de la composante statique.

La composante variable du premier champ magnétique peut être appliquée de manière continue.

En variante, la composante variable du premier champ magnétique peut être appliquée sous la forme d'impulsions dont l'homme du métier saura déterminer la durée. A titre indicatif, la durée des impulsions peut par exemple être comprise entre 0.1 et 100 µs, par exemple entre 1 et 50 µs.

La composante variable du second champ magnétique peut être appliquée de manière continue.

En variante, la composante variable du second champ magnétique peut être appliquée sous la forme d'impulsions dont l'homme du métier saura déterminer la durée. A titre indicatif, la durée des impulsions peut par exemple être comprise entre 0,1 et 100 µs. La composante variable du premier champ magnétique peut présenter un spectre fréquentiel comportant au moins un pic centré sur une fréquence par exemple comprise entre 20 et 600 MHz, par exemple entre 50 et 500 MHz, par exemple entre 100 et 200MHz.

La composante variable du second champ magnétique peut présenter un spectre fréquentiel comportant au moins un pic centré sur une fréquence par exemple comprise entre 10 et 200 GHz.

Les composantes variables des premier et second champs magnétiques peuvent être générées par des circuits résonants, par exemple de type RLC, comportant au moins une bobine de résonance.

### Gradients sur l'axe de la collision

Comme mentionné plus haut, le premier et/ou second champ(s) magnétique(s) peu(ven)t avoir un gradient non nul sur l'axe de la collision.

La théorie quantique prévoit que l'application d'un champ magnétique ayant un gradient non nul peut permettre de mettre dans un état défini les spins ainsi que de les aligner colinéairement avec le champ.

La direction du gradient peut former un angle non nul, par exemple supérieur à 45°, par exemple sensiblement égal à 90°, avec l'axe de la collision.

Lorsque la direction du gradient forme un angle non nul avec l'axe de la collision, il est par exemple possible de séparer les particules selon leur état de spin. On peut alors obtenir à partir d'un même faisceau de particules deux faisceaux ayant chacun en leur sein des particules mises dans un état de spin défini.

En variante, la direction du gradient peut former un angle sensiblement nul avec l'axe de la collision. Dans ce dernier cas, il est possible que le(s) premier et/ou second champ(s) magnétique(s) comporte(nt) chacun, en outre, une composante statique et une composante variable non nulle. Lesdites composantes statiques et variables peuvent être telles que décrites ci-dessus.

Par ailleurs, les premier et/ou second champ(s) magnétique(s) peu(ven)t présenter, sur l'axe de la collision, un gradient d'intensité non nulle et par exemple inférieure à 20 T/m. Les premier et/ou second champ(s) magnétique(s), ayant un gradient non nul sur l'axe de la collision, peu(ven)t être appliqué(s) de manière continue.

En variante, les premier et/ou second champ(s) magnétique(s), ayant un gradient non nul sur l'axe de la collision, peu(ven)t être appliqué(s) sous la forme d'impulsions.

Des gradients de champ magnétique convenant à l'invention peuvent par exemple être produits par deux entrefers similaires à ceux mis en oeuvre dans l'expérience de Stem et Gerlach ou par une pluralité de bobinages ayant des nombres de boucles différents et/ou des diamètres différents.

### Champs magnétiques et électriques utilisés pour la déviation des particules

### Déviation des électrons

Le procédé selon l'invention peut comporter, avant l'étape de collision, une étape de déviation du faisceau d'électrons.

La déviation du faisceau d'électrons peut permettre de ne pas nécessairement positionner en regard les sources d'électrons et de noyaux diminuant ainsi l'endommagement de la source d'électrons par les neutrons générés après collision entre les faisceaux de noyaux et d'électrons.

L'étape de déviation du faisceau d'électrons peut comporter une étape d'application d'au moins un champ magnétique et/ou d'au moins un champ électrique de déviation.

Le champ magnétique de déviation peut être statique ou non.

Le champ électrique de déviation peut être statique ou non.

Le champ magnétique de déviation peut par exemple avoir une intensité comprise entre 0,1 et 5 T, par exemple entre 0,5 et 3 T.

Le champ magnétique de déviation peut être homogène ou inhomogène.

Le champ électrique de déviation peut être homogène ou inhomogène.

### Déviation des noyaux

Par ailleurs, le procédé selon l'invention peut comporter une étape de déviation des noyaux n'ayant pas subi de collision avec les électrons.

Cette étape de déviation des noyaux peut par exemple comporter une étape d'application d'au moins un champ magnétique et/ou d'au moins un champ électrique de déviation tel que défini ci-dessus.

La déviation des noyaux n'ayant pas subi de collision peut permettre de limiter la présence de ces derniers dans le faisceau de neutrons produit.

### Champs magnétiques utilisés pour le maintien de l'état de spin des neutrons générés après collision entre les faisceaux de noyaux et d'électrons

Le procédé selon l'invention peut comporter, après l'étape de collision, une étape de maintien de l'état de spin des neutrons générés.

Cette étape de maintien peut comporter une étape d'application d'au moins un champ magnétique de maintien.

Le champ magnétique de maintien peut être statique.

Le champ magnétique de maintien peut être homogène.

Le champ magnétique de maintien peut avoir une intensité comprise entre 0,5 et 45 T, par exemple entre 1 et 20 T.

Le champ magnétique de maintien peut être obtenu par des bobines supraconductrices, des bobines résistives ou des bobines « hybrides ».

### Enceinte

### Vide et température

Le procédé selon l'invention peut avoir lieu dans une enceinte ayant une pression par exemple inférieure ou égale à 1 Pa, par exemple à 10⁻⁵ Pa.

Une enceinte ayant une pression faible permet de limiter la densité de particules et peut donc permettre de limiter les sources de perturbation potentielles des faisceaux de noyaux et d'électrons.

De telles pressions peuvent, par exemple, être obtenues par l'utilisation de pompes à vide ioniques ou par tout autre moyen considéré par l'homme du métier comme pouvant convenir à l'invention.

Le procédé selon l'invention peut avoir lieu dans une enceinte ne comportant sensiblement pas de matière autre que les faisceaux d'électrons et de noyaux.

### Paroi de l'enceinte

On pourra choisir l'épaisseur et la nature du matériau constituant la paroi de l'enceinte de manière à contenir les rayonnements et particules produites après l'étape de collision ainsi que les faisceaux de noyaux et d'électrons destinés à être mis en collision.

### Diaphragme de sortie

Le collisionneur pour générer des neutrons selon l'invention peut comporter un diaphragme de sortie.

Par exemple dans le cas où le collisionneur selon l'invention est relié à une autre enceinte sous vide, le diaphragme de sortie peut être un disque ajouté de manière à laisser passer le faisceau de neutrons.

Le diaphragme de sortie peut comporter, par exemple être constitué, d'un ou plusieurs matériau(x) faiblement absorbeurs de neutrons.

Le diaphragme de sortie peut comporter, par exemple consister en, du carboné, du magnésium, du plomb, de la silice, du zirconium ou de l'aluminium.

L'ouverture du diaphragme de sortie peut être de toute forme par exemple circulaire, ovale, elliptique, polygonale.

### Description des figures

L'invention pourra être mieux comprise à la lecture de la description détaillée qui va suivre, d'exemples non limitatifs de mise en oeuvre de celle-ci, et à l'examen du dessin annexé, sur lequel :
- la figure 1 illustre de manière schématique une pluralité de spins soumis à l'action d'un champ magnétique apte à les mettre dans un état de spin défini,
- la figure 2 représente schématiquement un exemple d'installation de génération de neutrons selon l'invention,
- les figures 2a et 2b représentent schématiquement, à deux temps différents, une installation correspondant à une variante de réalisation de la figure 2,
- la figure 3 illustre schématiquement un détail de la figure 2,
- les figures 3a à 3c illustrent schématiquement des variantes de la figure 3,
- la figure 4 représente schématiquement un autre exemple de réalisation d'une installation de génération de neutrons selon l'invention,
- la figure 5 illustre schématiquement la collision des faisceaux d'électrons et de noyaux mis en oeuvre dans la figure 4,
- la figure 6 représente schématiquement un exemple de réalisation d'un dispositif interferomètrique pour l'obtention d'un faisceau mis dans un état interférentiel, et
- la figure 7 représente schématiquement un exemple de réalisation d'une installation médicale selon l'invention.

Dans toute la suite, les vecteurs sont représentés en caractères gras.

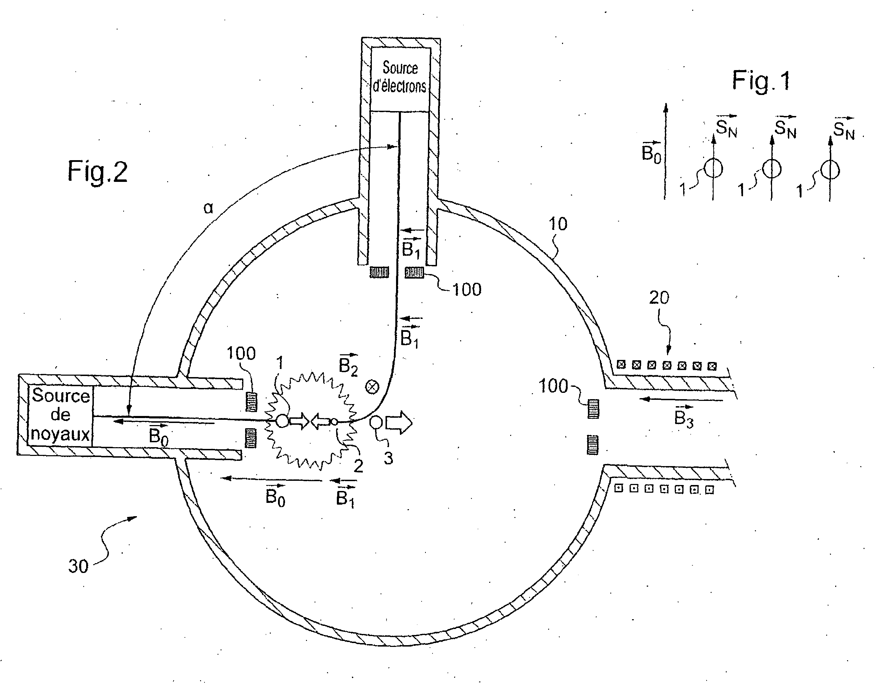

A la figure 1 est illustré schématiquement une pluralité de noyaux 1, destinés à entrer en collision avec une pluralité d'électrons, ayant chacun un spin **S_{N}** soumis à l'action d'un champ magnétique **B₀** apte à les mettre dans un état de spin défini. Le champ **B₀** comporte une composante statique et une composante variable et/ou un gradient non nul sur l'axe de la collision. Les spins des noyaux 1 sont, sous l'action du champ **B₀,** alignés avec **B₀.** En outre, les spins peuvent, comme représenté, être de même sens avec **B₀.**

Bien entendu, bien que non illustré, les spins d'une pluralité d'électrons soumis à l'action d'un champ magnétique apte à les mettre dans un état de spin défini seront aussi alignés avec ledit champ magnétique. Ces spins pourront aussi être, en outre, de même sens avec ledit champ magnétique.

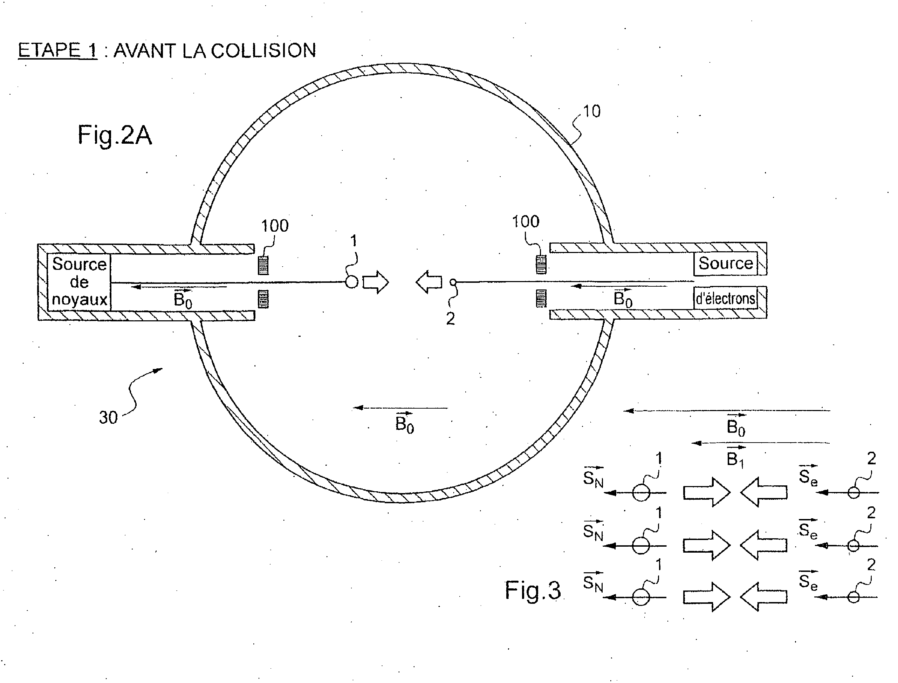

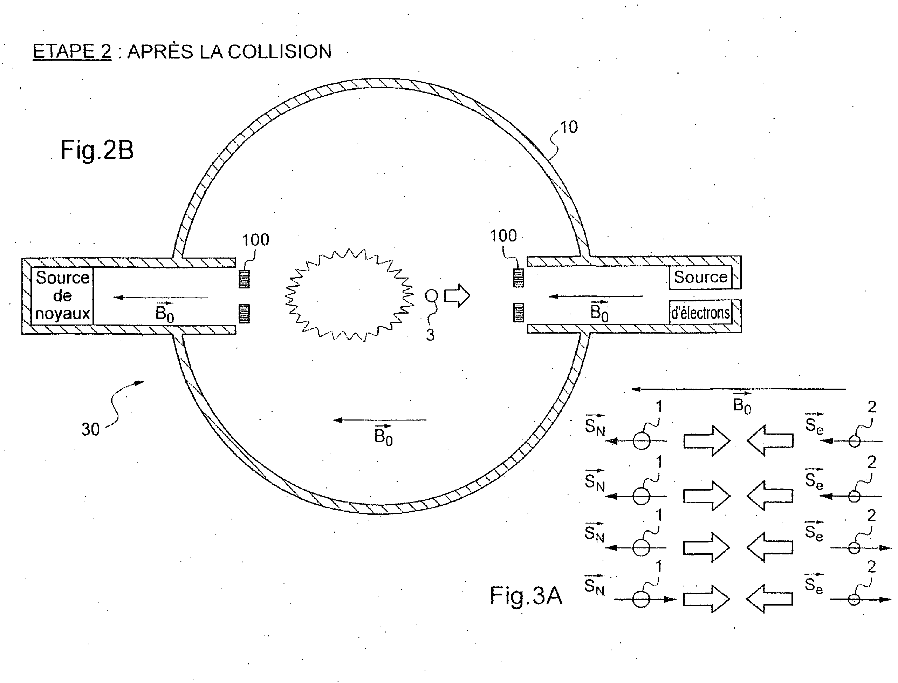

A la figure 2 est représenté un faisceau d'électrons 2 généré par une source d'électrons et un faisceau de noyaux 1 généré par une source de noyaux.

Les faisceaux d'électrons et de noyaux générés sont chacun amenés à traverser un diaphragme 100 disposé après la sortie de leur source respective.

Un premier champ magnétique **B₀,** configuré pour la mise dans un état de spin défini du faisceau de noyaux 1, comportant une composante statique et une composante variable et/ou un gradient non nul sur l'axe de la collision est appliqué.

Le faisceau d'électrons 2 subit un second champ magnétique **B₁,** configuré pour la mise dans un état de spin défini du faisceau d'électrons 2, lequel comporte une composante statique et une composante variable et/ou un gradient non nul sur l'axe de la collision.

Le faisceau d'électrons 2 est ensuite dévié par un champ magnétique de déviation **B₂.** Bien que non illustré, le faisceau d'électrons pourrait être dévié par un champ électrique de déviation ou encore par la combinaison d'un champ électrique et d'un champ magnétique de déviation.

On constate que les faisceaux de noyaux 1 et d'électrons 2 forment, à la sortie de leur source respective, un angle α lequel est représenté, à la figure 2, comme étant sensiblement égal à 90°. Plus généralement, l'angle α peut être compris entre 0 et 180°. Lorsque α est supérieur ou égal à 90°, il peut être préférable d'appliquer un champ magnétique et/ou électrique de déviation de manière à amener, lors de l'étape de collision, le faisceau de noyaux 1 et d'électrons 2 dans un sens de déplacement sensiblement opposé. En revanche lorsque α est inférieur à 90°, il peut être préférable d'appliquer un champ magnétique et/ou électrique de déviation de manière à amener, lors de l'étape de collision, le faisceau de noyaux 1 et d'électrons 2 dans un sens de déplacement sensiblement identique.

Les premier et second champs magnétiques sont générés par dés bobines non représentées.

La collision entre le faisceau de noyaux 1 et le faisceau d'électrons 2 a lieu dans une enceinte 30 comportant une paroi 10 et provoque la génération de neutrons 3. On voit que, lors de l'étape de collision, le faisceau de noyaux 1 et d'électrons 2 ont un sens de déplacement sensiblement opposé,

Les neutrons générés 3 peuvent être amenés à traverser un diaphragme 100.

Les neutrons générés 3 peuvent être maintenus dans un état de spin défini par le champ magnétique de maintien **B₃**, par exemple créé par une bobine 20.

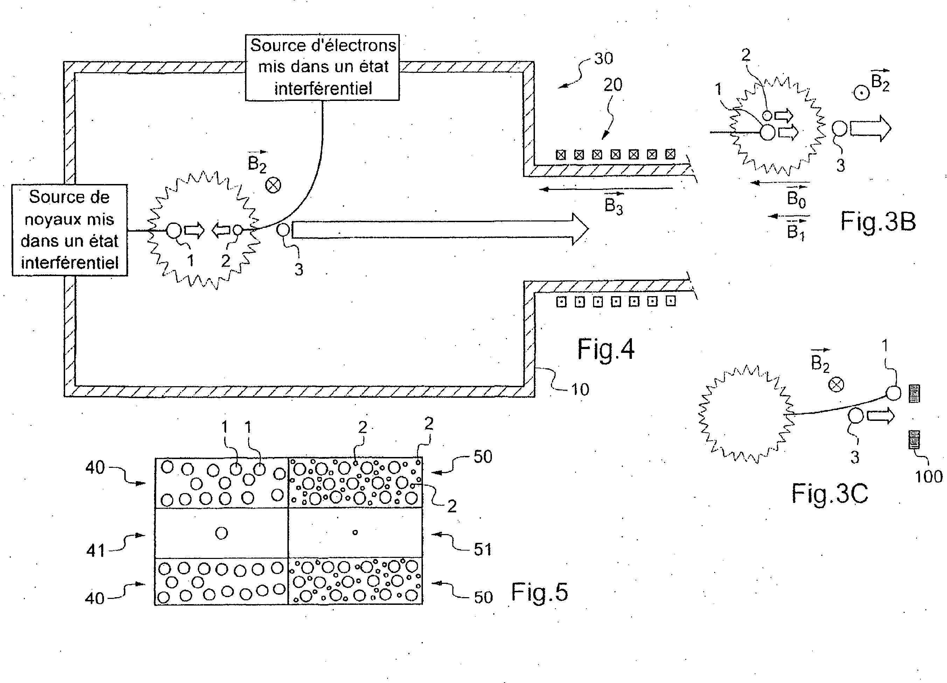

A la figure 3 sont illustrés les états de spin de noyaux 1 et d'électrons 2 juste avant leur de collision. Comme illustré, les spins des électrons **Sₑ** et les spins des noyaux S_{N} peuvent, lors de l'étape de collision, être alignés dans le même sens. En outre, les spins des noyaux 1 respectivement des électrons 2 peuvent être colinéaires aux vecteurs vitesses des noyaux 1 respectivement des électrons 2 lors de l'étape de collision.

A la figure 3a est représentée une variante de réalisation de la figure 3 où le second champ magnétique est identique au premier champ magnétique **B₀** et est un champ statique. On peut constater que les spins sont mis dans un état défini mais ne sont pas tous alignés dans le sens du champ.

A la figure 3b est représentée une variante de réalisation de la figure 3 où les faisceaux de noyaux 1 et d'électrons 2 ont, lors de l'étape de collision, des sens de déplacement sensiblement identiques. Dans ce cas, l'angle a entre les faisceaux de noyaux 1 et d'électrons 2 à la sortie de leur source respective peut, par exemple, être inférieur à 90°. Le spin du noyau 1 respectivement de l'électron 2 et le vecteur vitesse du noyau 1 respectivement de l'électron 2 peuvent être colinéaires et avoir le même le sens lors de l'étape de collision.

A la figure 3c est représenté une variante de réalisation où un noyau 1 n'ayant pas subi de collision est dévié par le champ magnétique de déviation **B₂**.

Aux figures 3b et 3c, bien que non illustré, le champ magnétique de déviation B₂ peut être remplacé par un champ électrique de déviation ou par la combinaison d'un champ magnétique et d'un champ électrique de déviation.

Les sources de noyaux et d'électrons sont représentées, à la figure 2a, comme étant mise en regard, générant chacune respectivement un faisceau de noyaux 1 et un faisceau d'électrons 2, ayant chacun sensiblement la même direction et un sens de déplacement opposé.

En outre, un premier champ magnétique **B₀** identique au second champ magnétique, permettant de mettre les faisceaux de noyaux 1 et d'électrons 2 dans un état de spin défini, est appliqué dans l'enceinte 30.

A la figure 2b est représentée l'évolution du système de la figure 2a après l'étape de collision, où un faisceau de neutrons 3 est généré sensiblement dans la direction de la source d'électrons.

Bien entendu, la source d'électrons 2 est, comme illustré, choisie de manière à limiter les interactions et donc l'endommagement produit par le faisceau de neutrons 3.

A la figure 4, les faisceaux de noyaux 1 et d'électrons 2 sont, avant la collision, mis dans un état interférentiel. Le faisceau d'électrons 2 est en outre, dévié sous l'action d'un champ magnétique de déviation **B₂**. Un faisceau de neutrons 3 est généré après collision entre le faisceau d'électrons et le faisceau de noyaux.

A la figure 5 est illustrée schématiquement la collision des faisceaux de noyaux 1 et d'électrons 2 mis chacun dans un état d'interférences spatiales. Les zones d'interférence constructives 40 au sein du faisceau de noyau 1 sont illustrées comme recouvrant sensiblement la totalité des zones d'interférence constructives 50 présentes au sein du faisceau d'électrons 2 mis dans un état d'interférences spatiales. La figure 5 illustre, en outre, le recouvrement des zones d'interférence destructives respectives des deux faisceaux 41 et 51.

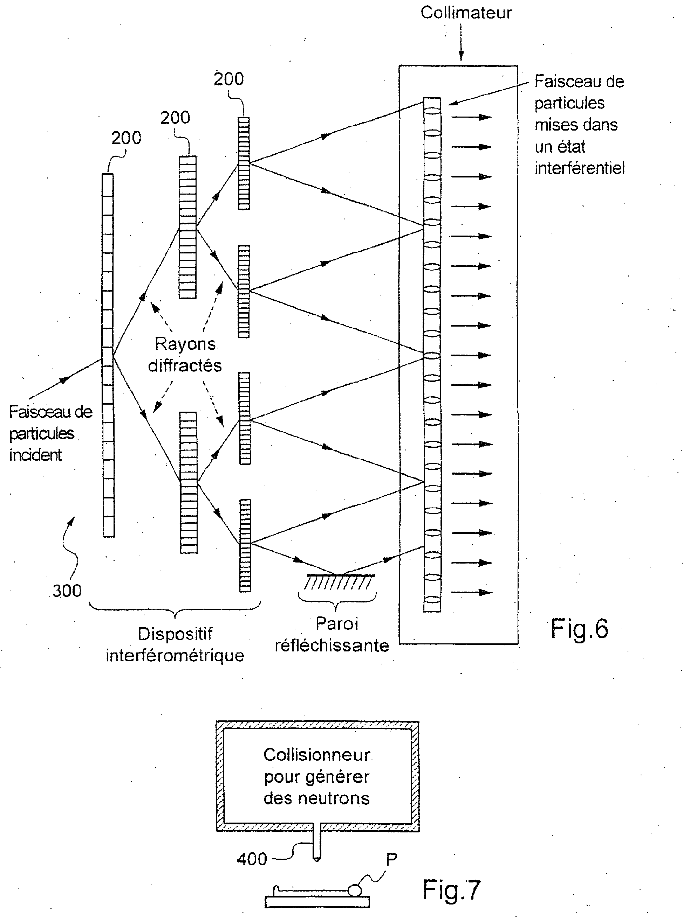

A la figure 6 est représenté un dispositif interférométrique 300 permettant la mise d'un faisceau de particules incidentes dans un état interférentiel, notamment dans un état d'interférences spatiales, comportant une succession de réseaux de diffraction en transmission 200.

Les faisceaux de particules émergents des réseaux de diffraction 200 traversent ensuite un collimateur permettant de ne générer qu'un seul faisceau.

L'installation médicale représentée à la figure 7 est utilisée pour la destruction des cellules cancéreuses par faisceau de neutrons. Cette installation comporte un moyen de positionnement d'un patient à traiter P ainsi qu'un collisionneur selon l'invention à la sortie duquel est placé une tête d'irradiation 400 permettant l'irradiation du patient P avec le faisceau de neutrons généré par les collisionneurs selon l'invention.

L'expression « comportant un(e) » doit être comprise comme « comportant au moins un(e) ».

## Revendications

1. Procédé pour générer des neutrons (3) comportant au moins les étapes successives consistant à :
a) mettre dans un état de spin défini et/ou dans un état d'interférences spatiales au moins un faisceau d'électrons (2) et au moins un faisceau de noyaux (1) choisis parmi les protons, deuterons et tritons, les faisceaux de noyaux (1) et d'électrons (2) mis dans un état d'interférences spatiales comportant chacun au moins une zone d'interférences constructives (40 ; 50) et au moins une zone d'interférences destructives (41 ; 51), et
b) faire entrer en collision lesdits au moins un faisceau de noyaux (1) et au moins un faisceau d'électrons (2),
lorsque les faisceaux de noyaux (1) et d'électrons (2) sont mis dans un état de spin défini lors de l'étape a), l'étape a) comporte une étape d'application d'au moins :
- un premier champ magnétique (**B₀**), configuré pour mettre les spins (**S_{N}**) des noyaux dans un état défini, ayant une composante statique d'intensité comprise entre 0,5 et 45 T et/ou un gradient non nul sur l'axe de la collision, et
- un second champ magnétique (**B₁**), configuré pour mettre les spins (**Sₑ**) des électrons dans un état défini, ayant une composante statique d'intensité comprise entre 0,1 et 20 T et/ou un gradient non nul sur l'axe de la collision.

2. Procédé selon la revendication 1, les faisceaux de noyaux (1) et d'électrons (2) étant chacun mis dans un état de spin défini et dans un état d'interférences spatiales lors de l'étape a).

3. Procédé selon l'une des revendications 1 et 2, les spins (**S_{c}**; **S_{N}**) des électrons et des noyaux étant, lors de l'étape b), alignés dans le même sens.

4. Procédé selon l'une quelconque des revendications précédentes, les spins des électrons (2) respectivement des noyaux (1) et les vecteurs vitesses des électrons (2) respectivement des noyaux (1) étant colinéaires lors de l'étape b).

5. Procédé selon l'une quelconque des revendications précédentes, les vecteurs vitesses des électrons (2) et des noyaux (1), amenés à entrer en collision, formant, lors de l'étape b), un angle orienté compris entre 170 et 190°.

6. Procédé selon l'une quelconque des revendications 1 à 4, les vecteurs vitesses des électrons (2) et des noyaux (1), amenés à entrer en collision, formant, lors de l'étape b), un angle orienté compris entre -10 et 10°.

7. Procédé selon l'une quelconque des revendications précédentes, au moins 50% des noyaux (1) constituant le faisceau de noyaux (1) ayant une énergie comprise entre 1 et 10⁷ eV.

8. Procédé selon l'une quelconque des revendications précédentes, au moins 50 % des électrons (2) constituant le faisceau d'électrons (2) ayant une énergie comprise entre 1 et 10⁷ eV.

9. Procédé selon l'une quelconque des revendications précédentes, le premier champ magnétique (**B₀**) ayant, en outre, une composante variable appliquée sous la forme d'impulsions de durée par exemple comprise entre 0,1 et 100 µs et le second champ magnétique (**B₁**) ayant, en outre, une composante variable appliquée sous la forme d'impulsions de durée par exemple comprise entre 0,1 et 100 µs.

10. Procédé selon l'une quelconque des revendications précédentes, le premier champ magnétique (**B₀**) ayant, en outre, une composante variable présentant un spectre fréquentiel comportant un pic centré sur une fréquence comprise entre 20 et 600 MHz et le second champ magnétique (**B₁**) ayant, en outre, une composante variable présentant un spectre fréquentiel comportant un pic centré sur une fréquence comprise entre 10 et 200 GHz.

11. Procédé selon l'une quelconque des revendications précédentes, ledit au moins un faisceau de noyaux (1) étant émis sous la forme d'impulsions de durée inférieure ou égale à 10⁻³s.

12. Procédé selon l'une quelconque des revendications précédentes, ledit au moins un faisceau d'électrons (2) étant émis sous la forme d'impulsions de durée inférieure ou égale à 10⁻³s.

13. Procédé selon l'une quelconque des revendications précédentes comportant, en outre, une étape de maintien de l'état de spin des neutrons (3) générés après l'étape b).

14. Collisionneur pour générer des neutrons (3) par mise en oeuvre d'un procédé selon l'une quelconque des revendications précédentes, comportant :
- une enceinte (30),
- une source de noyaux configurée pour générer au moins un faisceau de noyaux (1) choisis parmi les protons, deuterons et tritons,
- une source d'électrons configurée pour générer au moins un faisceau d'électrons (2), et
• un moyen permettant de générer des champs magnétiques **(B₀ ; B₁)** configurés pour mettre lesdits au moins un faisceau de noyaux (1) et au moins un faisceau d'électrons (2) dans un état de spin défini avant la collision, ledit moyen permettant la génération d'au moins :
- un premier champ magnétique (**B₀**), configuré pour mettre les spins (S_{N}) des noyaux dans un état défini, ayant une composante statique d'intensité comprise entre 0,5 et 45 T et/ou un gradient non nul sur l'axe de la collision, et
- un second champ magnétique (**B₁**), configuré pour mettre les spins (Sₑ) des électrons dans un état défini, ayant une composante statique d'intensité comprise entre 0,1 et 20 T et/ou un gradient non nul sur l'axe de la collision, et/ou
• un moyen, comportant notamment un ou plusieurs dispositifs interférométriques (300), permettant d'obtenir des interférences de particules configuré pour mettre lesdits au moins un faisceau de noyaux (1) et au moins un faisceau d'électrons (2) dans un état d'interférences spatiales, avant la collision, les faisceaux de noyaux (1) et d'électrons (2) mis dans un état d'interférences spatiales comportant chacun au moins une zone d'interférences constructives (40 ; 50) et au moins une zone d'interférences destructives (41 ; 51).

## Claims

1. Method for generating neutrons (3) comprising at least the successive steps of:
a) putting at least one beam of electrons (2) and at least one beam of nuclei (1) selected from protons deuterons and tritons, into a defined state of spin and/or a state of spatial interference, the beams of nuclei (1) and electrons (2) put into a state of spatial interference each comprising at least one zone of constructive interference (40; 50) and at least one zone of destructive interference (41; 51), and
b) making said at least one beam of nuclei (1) and at least one beam of electrons (2) collide, when the beams of nuclei (1) and electrons (2) are put into a defined state of spin during step a), step a) comprising a step of application of at least:
- a first magnetic field (B₀) configured to bring the spins (S_{N}) of the nuclei into a defined state, having a static intensity component of between 0.5 and 45 T and/or a gradient other than zero on the axis of the collision, and
- a second magnetic field (B₁) configured to put the spins (Sₑ) of the electrons into a defined state, having a static intensity component of between 0.1 and 20 T and/or a gradient other than zero on the axis of the collision.

2. Method according to claim 1, the beams of nuclei (1) and electrons (2) each being put into a defined state of spin and into a state of spatial interference during the step a).

3. Method according to one of claims 1 and 2, the spins (Sₑ; S_{N}) of the electrons and nuclei being aligned in the same direction during the step b).

4. Method according to any one of the preceding claims, the spins of the electrons (2) and nuclei (1) respectively and the speed vectors of the electrons (2) and nuclei (1) respectively being colinear during the step b).

5. Method according to any one of the preceding claims, the speed vectors of the electrons (2) and nuclei (1) made to collide forming an oriented angle of between 170 and 190° during the step b).

6. Method according to any one of claims 1 to 4, the speed vectors of the electrons (2) and nuclei (1) made to collide forming an oriented angle of between -10 and 10° during the step b).

7. Method according to any one of the preceding claims, at least 50% of the nuclei (1) constituting the beam of nuclei (1) having an energy of between 1 and 10⁷ eV.

8. Method according to any one of the preceding claims, at least 50% of the electrons (2) constituting the beam
of electrons (2) having an energy of between 1 and 10⁷ eV.

9. Method according to any one of the preceding claims, the first magnetic field (B₀) having in addition a variable component applied in the form of pulses with a length for example of between 0.1 and 100 µs and the second magnetic field (B₁) having in addition a variable component applied in the form of pulses with a length for example of between 0.1 and 100 µs.

10. Method according to any one of the preceding claims, the first magnetic field (B₀) having in addition a variable component exhibiting a frequency spectrum having a peak centred on a frequency of between 20 and 600 MHz and the second magnetic field (B₁) having in addition a variable component exhibiting a frequency spectrum having a peak centred on a frequency of between 10 and 200 GHz.

11. Method according to any one of the preceding claims, said at least one beam of nuclei (1) being emitted in the form of pulses with a length less than or equal to 10⁻³s.

12. Method according to any one of the preceding claims, said at least one beam of electrons (2) being emitted in the form of pulses with a length less than or equal to 10⁻³s.

13. Method according to any one of the preceding claims comprising in addition a step in which the state of spin
of the generated neutrons (3) is maintained after the step b).

14. Collider for generating neutrons (3) by implementing a method according to any one of the preceding claims, comprising:
- an enclosure (30),
- a source of nuclei configured to generate at least one beam of nuclei (1) selected from protons, deuterons and tritons,
- a source of electrons configured to generate at least one beam of electrons (2), and
• a means making it possible to generate magnetic fields (B₀; B₁) configured to put said at least one beam of nuclei (1) and at least one beam of electrons (2) into a defined state of spin before the collision, said means allowing the generation of at least:
- a first magnetic field (B₀) configured to put the spins (S_{N}) of the nuclei into a defined state, having a static intensity component of between 0.5 and 45 T and/or a gradient other than zero on the axis of the collision, and
- a second magnetic field (B₁) configured to put the spins (Sₑ) of the electrons into a defined state, having a static intensity component of between 0.1 and 20 T and/or a gradient other than zero on the axis of the collision, and/or
• a means comprising in particular one or more interferometric devices (300), making it possible to obtain interferences of particles, configured to put said at least one beam of nuclei (1) and at least one beam of electrons (2) into a state of spatial interference, before the collision, the beams of nuclei (1) and electrons (2) put into a state of spatial interference each having at least one zone of constructive interference (40; 50) and at least one zone of destructive interference (41; 51).

## Patentansprüche

1. Verfahren zum Erzeugen von Neutronen (3) in mindestens folgenden Schritten:
a) mindestens ein Bündel aus Elektronen (2) und mindestens ein Kernbündel (1) aus Protonen, Deuteronen und/oder Tritonen werden in einen definierten Spinzustand und/oder einen räumlichen Interferenzzustand versetzt, wobei die in einen räumlichen Interferenzzustand versetzten Bündel aus Kernen (1) und Elektronen (2) jeweils mindestens eine Zone konstruktiver Interferenzen (40; 50) und mindestens eine Zone destruktiver Interferenzen (41;51) aufweisen, und
b) das mindestens eine Bündel aus Kernen (1) und das mindestens eine Bündel aus Elektronen (2) werden zur Kollision gebracht, wobei im Schritt a), in dem die Bündel aus Kernen (1) und Elektronen (2) in den definierten Spinzustand versetzt werden, im Schritt a) mindestens angelegt wird:
ein erstes Magnetfeld (B₀), das so konfiguriert ist, dass es die Kernspins (S_{N}) in einen definierten Zustand versetzt, eine statische Intensitätskomponente zwischen 0,5 und 4,5 T und/oder einen von Null verschiedenen Gradient auf der Kollisionsachse aufweist, und
ein zweites Magnetfeld (B₁), das so konfiguriert ist, dass es die Elektronenspins (S_{C}) in einen definierten Zustand versetzt, eine statische Intensitätskomponente zwischen 0,1 und 20 T und/oder einen von Null verschiedenen Gradient auf der Kollisionsachse aufweist.

2. Verfahren nach Anspruch 1, wobei die Bündel aus Kernen (1) und Elektronen (1, 2) im Schritt a) jeweils in einen definierten Spinzustand und einen räumlichen Interferenzzustand versetzt werden.

3. Verfahren nach Anspruch 1 oder 2, wobei die Elektronen- und Kernspins (S_{C}; S_{N}) im Schritt b) in gleicher Richtung ausgerichtet werden.

4. Verfahren nach einem der vorhergehenden Ansprüche, wobei die Spins der Elektronen (2) bzw. der Kerne (1) und die Geschwindigkeitsvektoren der Elektronen (2) bzw. der Kerne (1) im Schritt b) kolinear sind.

5. Verfahren nach der vorhergehenden Ansprüche, wobei die Geschwindigkeitsvektoren der zur Kollision gebrachten Elektronen (2) und Kerne (1) im Schrift b) einen Richtungswinkel zwischen 170° und 190° bilden.

6. Verfahren nach einem der Ansprüche 1 bis 4, wobei die Geschwindigkeitsvektoren der zur Kollision gebrachten Elektroden (2) und Kerne (1) im Schritt b) einen Richtungswinkel zwischen -10° und 10° bilden.

7. Verfahren nach einem der vorhergehenden Ansprüche, wobei mindestens 50% der das Kernbündel bildenden Kerne (1) eine Energie zwischen 1 und 10⁷ eV haben.

8. Verfahren nach einem der vorhergehenden Ansprüche, wobei mindestens 50% der das Elektronenbündel bildenden Elektronen (2) eine Energie zwischen und 10⁷ eV haben.

9. Verfahren nach einem der vorhergehenden Ansprüche, wobei das erste Magnetfeld (B₀) ferner eine in Form von Impulsen einer Dauer von beispielsweise zwischen 0,1 uns 100 µs angelegte variable Komponente und das zweite Magnetfeld (B₁) ferner eine in Form von Impulsen einer Dauer von beispielsweise zwischen 0,1 uns 100 µs angelegte variable Komponente enthält.

10. Verfahren nach einem der vorhergehenden Ansprüche, wobei das erste Magnetfeld (B₀) ferner eine variable Komponente mit einem Frequenzspektrum enthält, das eine bei einer Frequenz zwischen 20 und 600 MHz zentrierte Spitze aufweist, und das zweite Magnetfeld (B₁) ferner eine variable Komponente mit einem Frequenzspektrum enthält, das eine bei einer Frequenz zwischen 10 und 200 GHz zentrierte Spitze aufweist

11. Verfahren nach einem der vorhergehenden Ansprüche, wobei das mindestens eine Bündel aus Kernen (1) in Form von Impulsen einer Dauer unter oder gleich 10⁻³ s emittiert wird.

12. Verfahren nach der vorhergehenden Ansprüche, das mindestens eine Bündel aus Elektronen (2) in Form von Impulsen einer Dauer unter oder gleich 10⁻³ s emittiert wird.

13. Verfahren nach einem der vorhergehenden Ansprüche mit ferner einem Schritt, in dem der Spinzustand der Neutronen (3) nach dem Schritt b) aufrecht erhalten wird.

14. Nach einem der vorhergehenden Ansprüche betriebene Kollisionsvorrichtung zum Erzeugen von Neutronen (3) mit
einem Mantel (3),
einer Kernquelle zum Erzeugen mindestens eines Kernbündels (1) aus Protonen, Deuteronen und/oder Tritonen,
einer Elektronenquelle zum Erzeugen mindestens eines Bündels aus Elektronen (1),
einer Einrichtung zum Erzeugen von Magnetfeldern (B₀; B₁), die so konfiguriert sind, dass sie das mindestens eine Bündel aus Kernen (1) und/oder das mindestens eine Bündel aus Elektronen (2) vor der Kollision in einen definierten Spinzustand versetzen, wobei die Einrichtung die Erzeugung mindestens
eines ersten Magnetfeldes (B₀), das so konfiguriert ist, dass es die Kernspins (S_{N}) in einen definierten Zustand versetzt, eine statische Intensitätskomponente zwischen 0,5 und 4,5 T und/oder einen von Null verschiedenen Gradient auf der Kollisionsachse aufweist, und
eines zweiten Magnetfeldes (B₁) gestattet, das so konfiguriert ist, dass es die Elektronenspins (S_{C}) in einen definierten Zustand versetzt, eine statische Intensitätskomponente zwischen 0,1 und 20 T und/oder einen von Null verschiedenen Gradient auf der Kollisionsachse aufweist, und/oder
einer Einrichtung, die insbesondere eine oder mehrere Interferometeranordnungen (300) aufweist, das Ausbilden von Teilcheninterferenzen gestattet und so gestaltet ist, dass sie mindestens ein Bündel aus Kernen (1) und mindestens ein Bündel Elektronen (2) vor der Kollision in einen räumlichen Interferenzzustand versetzt, wobei die in einen räumlichen Interferenzzustand versetzten Bündel aus Kernen (1) und Elektronen (2) jeweils mindestens eine Zone konstruktiver Interferenzen (40; 50) und mindestens eine Zone destruktiver Interferenzen (41; 51) aufweisen.
